# EUROPÄISCHE PATENTSCHRIFT

(11) **EP 2 159 447 B1**
(45) Veröffentlichungstag und Bekanntmachung des Hinweises auf die Patenterteilung: **08.02.2012**
(21) Anmeldenummer: 09163859.3
(22) Anmeldetag: 26.06.2009
(51) Int. Cl.: F16H 3/00, F16H 61/04, B60W 30/18, B60W 10/10

(54) **Lastschaltbarer Antriebsstrang**
Powershift transmission
Transmission à passage de vitesses sous couple

(30) Priorität: 02.09.2008 DE 102008046321
(43) Veröffentlichungstag der Anmeldung: 03.03.2010
(73) Patentinhaber: GETRAG Getriebe- und Zahnradfabrik Hermann Hagenmeyer GmbH & Cie KG, 74199 Untergruppenbach (DE)
(72) Erfinder: Bünder, Carsten, 74189, Weinsberg-Grantschen (DE)
(74) Vertreter: Witte, Weller & Partner

(56) Entgegenhaltungen:
- WO-A-01/88409
- DE-A1- 10 312 399
- DE-A1- 19 924 501
- DE-A1-102004 041 525
- DE-C1- 19 912 315

## Beschreibung

Die vorliegende Erfindung betrifft einen lastschaltbaren Antriebsstrang mit einer Eingangswelle, die mit einer Antriebseinheit verbindbar ist, mit einem Stufengetriebe, das ein erstes Teilgetriebe mit einer ersten Getriebeeingangswelle und ein zweites Teilgetriebe mit einer zweiten Getriebeeingangswelle sowie eine mit den Ausgängen der Teilgetriebe verbundene Getriebeausgangswelle und einer Mehrzahl von Radsätzen zur Einrichtung unterschiedlicher Gangstufen aufweist, und mit einer Lastkupplungseinrichtung, deren Eingangsglied mit der Eingangswelle verbunden ist, wobei die Eingangswelle über eine erste Kupplung mit der ersten Getriebeeingangswelle verbindbar ist, wobei ein Ausgangsglied der Lastkupplungseinrichtung mittels einer zweiten Kupplung mit der ersten Getriebeeingangswelle und mittels einer dritten Kupplung mit der zweiten Getriebeeingangswelle verbindbar ist, und wobei die Eingangswelle mittels einer vierten Kupplung mit der zweiten Getriebeeingangswelle verbindbar ist.

Ein derartiger lastschaltbarer Antriebsstrang ist bekannt aus dem Dokument DE 103 12 399 A1.

Ein derartiger Antriebsstrang eignet sich zur Anwendung in Kraftfahrzeugen, beispielsweise Personenkraftwagen. Antriebsstränge für Personenkraftwagen beinhalten solche mit einem manuellen Schaltgetriebe. Manuelle Schaltgetriebe können auch automatisiert werden (sogenannte ASGs). Problematisch bei diesen Getrieben ist der relativ geringe Komfort, insbesondere aufgrund der bei Gangwechseln auftretenden Zugkraftunterbrechung.

Wandlerautomatgetriebe weisen eine Mehrzahl von Planetenradsätzen und einen eingangsseitigen Drehmomentwandler auf. Diese Getriebe können Gangwechsel ohne Zugkraftunterbrechung durchführen, der Wirkungsgrad ist jedoch relativ gering.

Seit einigen Jahren sind ferner sogenannte Doppelkupplungsgetriebe für Kraftfahrzeuge in der Anwendung. Diese weisen ein erstes Teilgetriebe und ein zweites Teilgetriebe auf, wobei dem einen Teilgetriebe die geraden Gangstufen und dem anderen Teilgetriebe die ungeraden Gangstufen zugeordnet sind. Ferner weisen derartige Getriebe eine eingangsseitige Doppelkupplungsanordnung auf, die zwei Reibkupplungen aufweist, die den jeweiligen Teilgetrieben zugeordnet sind. Auch bei einem derartigen Teilgetriebe kann durch Überschneiden der Betätigung der zwei Reibkupplungen ein Gangwechsel zugkraftunterbrechungsfrei durchgeführt werden.

Doppelkupplungsgetriebe weisen einen relativ hohen Wirkungsgrad auf und sind relativ komfortabel.

Aus dem eingangs genannten Dokument DE 103 12 399 ist ein Lastschaltgetriebe zur Übertragung eines Drehmomentes bekannt, das zwei Getriebeeingangswellen und eine Getriebeausgangswelle und mehrere daran angeordnete Gangstufen aufweist. Die Getriebeeingangswellen sind mittels formschlüssiger Schaltkupplungen mit einer Abtriebswelle des Motors lösbar verbindbar. Zwischen dem Antriebsmotor und der Getriebeabtriebswelle ist nur eine Reibkupplung im Momentenflussweg vorgesehen.

Der Getriebeaufbau kann dabei einem Doppelkupplungsgetriebeaufbau entsprechen. Demzufolge kann aufgrund der nur einen Reibkupplung im Momentenflussweg gegenüber Doppelkupplungsgetrieben Bauraum eingespart werden.

Bei einem Lasthochschaltvorgang beispielsweise von der ersten in die zweite Gangstufe ist von einem Zustand auszugehen, bei dem die Abtriebswelle des Antriebsmotors über die formschlüssige Schaltkupplung der ersten Gangstufe starr mit der ersten Getriebeeingangswelle verbunden ist. In dem anderen Teilgetriebe ist die zweite Gangstufe vorgewählt. Anschließend wird die einzelne Reibkupplung schlupfend betätigt, um das Antriebsmoment auf das zweite Teilgetriebe zu übernehmen. Sobald das Antriebsmoment von der zweiten Gangstufe übernommen ist, wird die Schaltkupplung des ersten Ganges ausgelegt. Auch hierbei kann ein Hochschaltvorgang unter Last und im Wesentlichen zugkraftunterbrechungsfrei durchgeführt werden. Die Möglichkeiten der Vorwahl von Gangstufen im jeweils freien Teilgetriebe sind bei diesem Aufbau jedoch beschränkt.

Wenn der Antriebsstrang bei einem Bremsvorgang aufgetrennt werden soll, ist die zugeordnete formschlüssige Schaltkupplung zu öffnen. Dies muss unter Last erfolgen, was weitergehende Maßnahmen in Bezug auf den zugeordneten Aktuator bzw. die Verzahnungen an den Schaltklauen voraussetzt. Dies ist aus sicherheitstechnischen Gesichtspunkten problematisch.

Des Weiteren zeigen die Druckschriften DE 10 2004 041 525 A1 und DE 199 24 so1 A1 einen lastschaltbaren Antriebstrang gemäß dem Oberbegriff des Anspruchs 1.

Vor diesem Hintergrund ist es die Aufgabe der vorliegenden Erfindung, einen verbesserten lastschaltbaren Antriebsstrang anzugeben, der einen hohen Wirkungsgrad besitzt und kompakt baut. Ferner soll der Antriebsstrang eine hohe Betriebssicherheit aufweisen.

Diese Aufgabe wird einen lastschaltbaren Antriebsstrang mit den Merkmalen des Anspruchs 1 gelöst, wobei wenigstens eine der ersten bis vierten Kupplung als Reibkupplung ausgebildet ist, und wobei die Eingangswelle mit einem die Lastkupplungseinrichtung umgebenden Käfig (bei einer Trockenkupplung durch den Kupplungsdeckel realisierbar) verbunden ist, der auf der dem Stufengetriebe zugewandten Seite einen zweiten Wellenabschnitt aufweist, an dem ein zweites Eingangsglied für die vierte Kupplung angeordnet ist.

Hierdurch kann erreicht werden, dass der Antriebsstrang eine höhere Sicherheit besitzt, insbesondere dann, wenn eine der Kupplungen unter Last auszulegen ist. Dies ist mit einer Reibkupplung einfacher zu bewerkstelligen, beispielsweise dadurch, dass der zugehörige Aktuator abgeschaltet wird (bei einem hydraulischen Aktuator könnte dies einfach dadurch erreicht werden, dass dieser drucklos geschaltet wird).

Auf diese Weise kann auch die in der Regel radial außen liegende zweite Getriebeeingangswelle auf einfache Weise über die vierte Kupplung mit der Eingangswelle verbunden werden.

Die Reibkupplungen können in Öffnungsrichtung vorgespannt sein, beispielsweise mittels zugehöriger Federn.

Ferner ist es bevorzugt, wenn die Reibkupplungen unabhängig voneinander betätigbar sind. Demzufolge ist es beispielsweise möglich, bei eingelegter Gangstufe in einem Teilgetriebe in dem anderen Teilgetriebe einen beliebigen anderen Gang vorzuwählen. Gangwechsel können daher schneller erfolgen.

Die Aufgabe wird somit vollkommen gelöst.

Von besonderem Vorzug ist es, wenn wenigstens eine der Kupplungen als Konuskupplung ausgebildet ist.

Mit einer Konuskupplung kann bereits bei einer relativ geringen Aktuatorkraft ein Reibschluss erzielt werden.

Gemäß einer weiteren Ausführungsform ist wenigstens eine der Kupplungen als Hirth-Verzahnungskupplung ausgebildet.

Eine Hirth-Verzahnungskupplung soll vorliegend auch als Reibkupplung angesehen werden. Diese hat zwar in Umfangsrichtung auch eine Formschlusskomponente. Entscheidend ist jedoch, dass bei einem Abschalten des zugehörigen Aktuators der Formschluss selbsttätig gelöst werden kann. Dies ist insbesondere im Fehlerfall von Bedeutung.

Ferner ist es vorteilhaft, wenn wenigstens zwei der Kupplungen radial ineinander verschachtelt angeordnet sind.

Hierdurch kann sich eine kompakte Bauweise ergeben, insbesondere in axialer Richtung.

Wenigstens zwei der Kupplungen sind dabei bevorzugt zwischen der Lastkupplungseinrichtung und dem Stufengetriebe angeordnet.

Hierdurch ergibt sich eine konstruktiv einfache Anbindung zwischen der Lastkupplungseinrichtung und den Getriebeeingangswellen.

Generell können alle vier Kupplungen in dem Bereich zwischen der Lastkupplungseinrichtung und dem Stufengetriebe angeordnet sein.

Gemäß einer weiteren bevorzugten Ausführungsform sind jedoch wenigstens zwei der Kupplungen in dem Stufengetriebe angeordnet.

Bei einem Stufengetriebe, das eine Konstruktion wie ein Doppelkupplungsgetriebe aufweist, das eine erste Getriebeeingangwelle und eine konzentrisch hierzu angeordnete zweite Getriebeeingangswelle in Form einer Hohlwelle aufweist, können die wenigstens zwei Kupplungen in dem Stufengetriebe beispielsweise in jenem Bereich vorgesehen sein, bei dem die als Hohlwelle ausgebildete zweite Getriebeeingangswelle endet.

Ferner ist es vorteilhaft, wenn die wenigstens eine Kupplung durch einen hydraulischen Aktuator betätigbar ist.

Bei einem hydraulischen Aktuator kann ein Öffnen der zugeordneten Kupplung relativ schnell erfolgen (beispielsweise durch Drucklos-Schalten des Aktuators).

Dabei ist es bevorzugt, wenn der Aktuator ein Ringkolbenaktuator ist.

Bei einem Ringkolbenaktuator ist eine konzentrische und radial ineinander verschachtelte Bauweise von wenigstens zwei Aktuatoren vergleichsweise einfach realisierbar.

Die Lastkupplungseinrichtung kann beispielsweise als Trockenkupplung ausgebildet sein.

Bei dieser Bauweise kann insgesamt ein geringes Gewicht des Antriebsstranges realisiert werden.

Gemäß einer alternativen Ausführungsform (die als eigene Erfindung anzusehen ist) ist die Lastkupplungseinrichtung durch eine hydrostatische Pumpe gebildet.

Insbesondere, wenn auch die Aktuatoren der Kupplungen hydraulisch arbeiten, können auf diese Weise Synergieeffekte erzielt werden.

Ferner ist es hierbei möglich, die hydrostatische Pumpe schlupfend zu betreiben.

In diesem Fall ist es beispielsweise auch möglich, dass die hydrostatische Pumpe im Schlupfbetrieb unter Druck stehendes Fluid in einer Druckleitung bereitstellt.

Das unter Druck stehende Fluid kann für weitere Steuerungszwecke verwendet werden.

Besonders bevorzugt ist es, wenn die Druckleitung mit einer hydraulischen Steuereinrichtung verbunden ist, die dazu ausgelegt ist, die wenigstens eine Kupplung mittels des unter Druck stehenden Fluides zu betätigen.

Hierdurch ist es möglich, auf eine separate Pumpe zum Betätigen der hydraulischen Aktuatoren der wenigstens einen Kupplung zu verzichten.

Insgesamt ist es ferner vorteilhaft, wenn die Eingangswelle sich axial durch die Lastkupplungseinrichtung hindurch erstreckt und dort einen ersten Wellenabschnitt aufweist, an dem ein erstes Eingangsglied für die erste Kupplung angeordnet ist.

Auf diese Weise kann die erste Kupplung konstruktiv einfach in den Antriebsstrang integriert werden.

Ferner ist es hierbei bevorzugt, wenn der erste Wellenabschnitt und der zweite Wellenabschnitt in axialer Richtung etwa gleich lang sind.

Hierdurch kann ein radial ineinander verschachtelter Aufbau der Kupplungen begünstigt werden.

Das in dem erfindungsgemäßen Antriebsstrang verwendete Stufengetriebe weist vorzugsweise eine Konstruktion bzw. einen Radsatzaufbau wie ein Doppelkupplungsgetriebe auf. Hierbei sind der einen Getriebeeingangswelle die geraden Gangstufen und der anderen Getriebeeingangswelle die ungeraden Gangstufen zugeordnet.

Bei Ausbildung der Lastkupplungseinrichtung durch eine hydrostatische Pumpe ist es bevorzugt, wenn das Gehäuse der Pumpe nicht fixiert, sondern mit der Eingangswellewelle verbunden wird. Die dabei verwendete Druckleitung kann mit einem Steuerventil in der hydraulischen Steuereinrichtung verbunden sein. Bei Schließen des Ventils wird das Pumpengehäuse mit der Eingangswelle mitgenommen, so dass die Lastkupplungseinrichtung geschlossen ist. Wenn das Ventil geöffnet wird, läuft das Gehäuse "leer", so dass die Lastkupplungseinrichtung offen ist.

Als hydrostatische Pumpe eignet sich insbesondere eine Radialkolbenpumpe. Mit dieser können relativ hohe Drücke erzielt werden. Da in der Pumpe nur relativ geringe Differenzdrehzahlen auftreten (die beispielsweise auf 2000 bis 3000 Umdrehungen pro Minute beschränkt sein können), ist die Verwendung einer solchen Radialkolbenpumpe vorteilhaft. Denn die als Lastkupplungseinrichtung verwendete Pumpe muss nicht die volle Drehzahl der Eingangswelle (bis zu 8000 Umdrehungen pro Minute) aufnehmen sondern nur die Differenzdrehzahl zwischen der Eingangswelle und den jeweiligen Getriebeeingangswellen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch ein Kraftfahrzeug mit einem erfindungsgemäßen Antriebsstrang;
- Fig. 2: den Antriebsstrang der Fig. 1 beim Anfahren im ersten Gang;
- Fig. 3: den Antriebsstrang der Fig. 1 beim Fahren im ersten Gang (Übergangszu- stand);
- Fig. 4: den Antriebsstrang der Fig. 1 beim Fahren im ersten Gang (Endzustand);
- Fig. 5: den Antriebsstrang der Fig. 5 beim Gangwechsel in den zweiten Gang;
- Fig. 6: den Antriebsstrang der Fig. 1 beim Gangwechsel in den zweiten Gang nach Übernahme des Momentes durch die zugeordnete Kupplung;
- Fig. 7: den Antriebsstrang der Fig. 1 beim Fahren im zweiten Gang (Übergangszu- stand);
- Fig. 8: den Antriebsstrang der Fig. 1 beim Fahren im zweiten Gang (Endzustand);
- Fig. 9: eine alternative Anordnung von Reibkupplungen in Form von Konuskupp- lungen;
- Fig. 10: eine der Fig. 1 entsprechende Darstellung einer alternativen Ausführungs- form eines erfindungsgemäßen Antriebsstranges mit einer Radialkolben- pumpe als Lastkupplungseinrichtung.

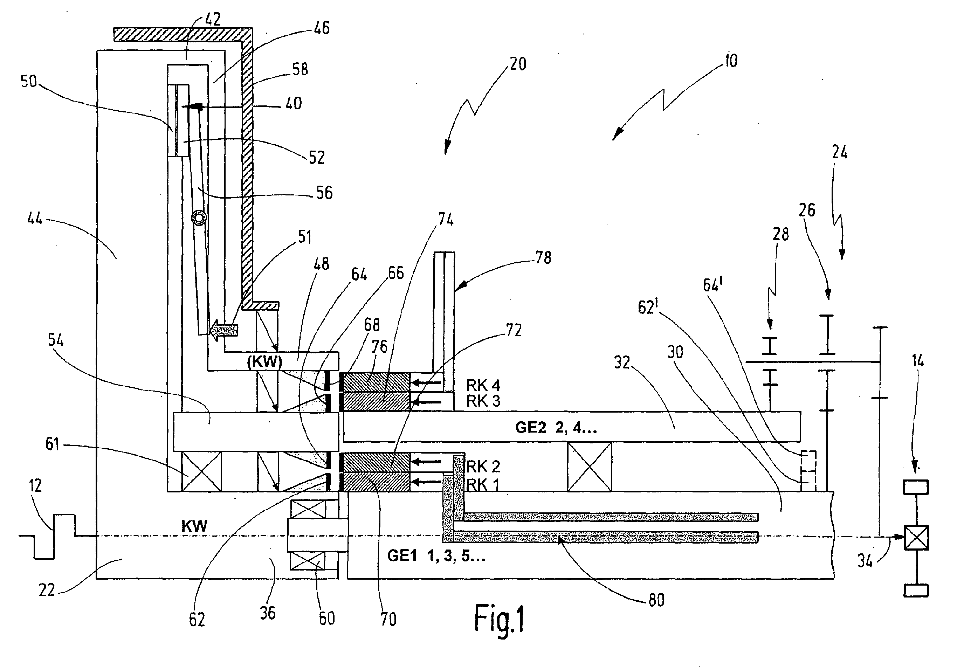

In Fig. 1 ist ein Kraftfahrzeug generell mit 10 bezeichnet, das beispielsweise als Personenkraftwagen ausgebildet sein kann.

Das Kraftfahrzeug 10 weist einen Antriebsmotor 12 und eine angetriebene Achse 14 auf.

Zur Übertragung von Antriebsleistung von dem Antriebsmotor 12 (der beispielsweise als Verbrennungsmotor ausgebildet sein kann) auf die angetriebene Achse 14 dient ein Antriebsstrang 20.

Der Antriebsstrang 20 weist eine Eingangswelle 22 (z.B. eine Kurbelwelle KW) auf, die mit einer Abtriebswelle des Antriebsmotors 12 starr verbunden ist.

Ferner weist der Antriebsstrang 20 ein Stufengetriebe 24 auf, dessen Konstruktion einem in einem Doppelkupplungsgetriebe verwendeten Stufengetriebe entsprechen kann. Demzufolge weist das Stufengetriebe 24 ein erstes Teilgetriebe 26 auf, dem die Gangstufen 1, 3, 5, etc. zugeordnet sind. Das Stufengetriebe 24 weist ferner ein zweites Teilgetriebe 28 auf, dem die geraden Gangstufen 2, 4, 6, etc. zugeordnet sind. Die Teilgetriebe 26, 28 sind in Form von Radsätzen in Fig. 1 in schematischer Form dargestellt.

Das erste Teilgetriebe 26 weist eine erste Getriebeeingangswelle 30 (GE1) auf. Das zweite Teilgetriebe 28 weist eine zweite Getriebeeingangswelle 32 (GE2) auf, die als Hohlwelle ausgebildet ist. Die zweite Getriebeeingangswelle 32 ist koaxial um die erste Getriebeeingangswelle 30 herum angeordnet.

Das Stufengetriebe 24 beinhaltet ferner eine Getriebeausgangswelle 34, die in an sich herkömmlicher Weise mit einem Differenzial der angetriebenen Achse 14 verbindbar ist.

Die Eingangswelle 22 ist koaxial zu der ersten Getriebeeingangswelle 30 vorgesehen. Genauer gesagt weist die Eingangswelle 22 einen ersten Wellenabschnitt 36 auf, der sich bis hin zu der ersten Getriebeeingangswelle 30 erstreckt.

Ferner beinhaltet der Antriebsstrang 20 eine Lastkupplungseinrichtung 40, die im vorliegenden Fall als Trockenkupplung ausgebildet ist. Die Lastkupplungseinrichtung 40 kann jedoch auch als nass laufende Kupplung ausgebildet sein, oder als hydrostatische Pumpe, wie es nachstehend noch beschrieben werden wird.

Die Lastkupplungseinrichtung 40 der Fig. 1 ist über einen nicht näher bezeichneten Aktuator (beispielsweise hydraulischer Art) betätigbar, wie es schematisch durch einen Pfeil 51 angedeutet ist.

Die Eingangswelle 22 ist starr mit einem Käfig 42 verbunden, der die Lastkupplungseinrichtung 40 umgibt. Auf der Seite des Antriebsmotors 12 kann der Käfig 42 beispielsweise ein Schwungrad 44 bilden.

Auf der dem Stufengetriebe 24 zugewandten Seite weist der Käfig 42 einen Radialabschnitt 46 auf, der mit einem zweiten, als Hohlwelle ausgebildeten Wellenabschnitt 48 verbunden ist. Der zweite Wellenabschnitt 48 ist koaxial zu dem ersten Wellenabschnitt 36 angeordnet und weist etwa die gleiche axiale Länge auf wie der erste Wellenabschnitt.

Ein Eingangsglied 50 der Lastkupplungseinrichtung 40 ist mit dem Schwungrad 44 verbunden. Ein Ausgangsglied 52 der Lastkupplungseinrichtung 40 ist mit einem dritten, als Hohlwelle ausgebildeten Wellenabschnitt 54 verbunden, der koaxial zwischen dem ersten Wellenabschnitt 36 und dem zweiten Wellenabschnitt 48 angeordnet ist.

Eine Druckplatte der Lastkupplungseinrichtung 40 zur Betätigung derselben ist bei 56 gezeigt. Ferner ist bei 58 in schematischer Form ein Gehäuse dargestellt, das die Lastkupplungseinrichtung 40 umgibt.

Die erste Getriebeeingangswelle 30 ist z.B. über ein erstes Lager 60 an der Eingangswelle 22 verdrehbar gelagert. Ferner ist der dritte Wellenabschnitt 54 mittels eines zweiten Lagers 61 verdrehbar an der Eingangswelle 22 gelagert.

Zwischen dem Gehäuse 58 und dem zweiten Wellenabschnitt 48 ist eine Wellendichtung vorgesehen. Ferner ist zwischen dem zweiten Wellenabschnitt 48 und dem dritten Wellenabschnitt 54 eine Wellendichtung vorgesehen. Schließlich ist zwischen dem dritten Wellenabschnitt 54 und der Eingangswelle 22 eine Wellendichtung vorgesehen. Die Wellendichtungen sind in Fig. 1 nicht näher bezeichnet.

Der dritte Wellenabschnitt 54 ist in axialer Richtung etwa gleich lang wie der erste Wellenabschnitt 36 und der zweite Wellenabschnitt 48.

Zur Verbindung der drei Wellenabschnitte 36, 48, 54 mit den zwei Getriebeeingangswellen 30, 32 sind vier Kupplungen vorgesehen, die jeweils als Reibkupplungen ausgebildet sind. Die Reibkupplungen können, wie hier dargestellt, als Hirth-Verzahnungskupplungen ausgebildet sein, können jedoch auch als Konuskupplungen oder Ähnliches ausgebildet sein, wie nachstehend noch beschrieben werden wird.

Die vier Kupplungen sind in axialer Richtung benachbart zu den Enden der drei Wellenabschnitte 36, 48, 54 angeordnet. Eine erste Kupplung 62 dient zum Verbinden des ersten Wellenabschnittes 36 mit der ersten Getriebeeingangswelle 30. Eine zweite Kupplung 64 ist radial außerhalb der ersten Kupplung 62 angeordnet und dient zum Verbinden des dritten Wellenabschnittes 54 mit der ersten Getriebeeingangswelle 30.

Die erste und die zweite Kupplung 62, 64 sind in radialer Richtung zwischen der ersten Getriebeeingangswelle 30 und der zweiten Getriebeeingangswelle 32 angeordnet.

Radial außerhalb der zweiten Getriebeeingangswelle 32 ist eine dritte Kupplung 66 vorgesehen, die dazu ausgelegt ist, die zweite Getriebeeingangswelle 32 mit dem dritten Wellenabschnitt 54 zu verbinden. Radial außerhalb der dritten Kupplung 66 ist eine vierte Kupplung 68 vorgesehen, die dazu ausgelegt ist, den zweiten Wellenabschnitt 48 mit der zweiten Getriebeeingangswelle 32 zu verbinden.

Zur Betätigung der Kupplungen 62-68 sind jeweils fluidisch betätigbare Aktuatoren vorgesehen, im vorliegenden Fall Ringkolbenaktuatoren. Ein erster Ringkolbenaktuator 70 (RK1) dient zum Betätigen der ersten Kupplung 62. Ein zweiter Ringkolbenaktuator 72 (RK2) dient zum Betätigen der zweiten Kupplung 64. Der erste und der zweite Ringkolbenaktuator 70, 72 sind radial ineinander verschachtelt angeordnet und sind in radialer Richtung zwischen der ersten Getriebeeingangswelle 30 und der zweiten Getriebeeingangswelle 32 angeordnet.

Ein dritter Ringkolbenaktuator 74 (RK3) dient zum Betätigen der dritten Kupplung 66. Ein vierter Ringkolbenaktuator 76 (RK4) dient zum Betätigen der vierten Kupplung 68. Der dritte und der vierte Ringkolbenaktuator 74, 76 sind radial außerhalb der zweiten Getriebeeingangswelle angeordnet.

Der dritte und der vierte Ringkolbenaktuator 74, 76 sind über erste Ölzuführungen 78 mit einer nicht näher dargestellten hydraulischen Steuereinrichtung verbunden. In entsprechender Weise sind der erste und der zweite Ringkolbenaktuator 70, 72 mit zweiten Ölzuführungen 80 verbunden, die beispielsweise über Kanäle innerhalb der ersten Getriebeeingangswelle 30 mit der zugeordneten hydraulischen Steuereinrichtung verbunden sein können.

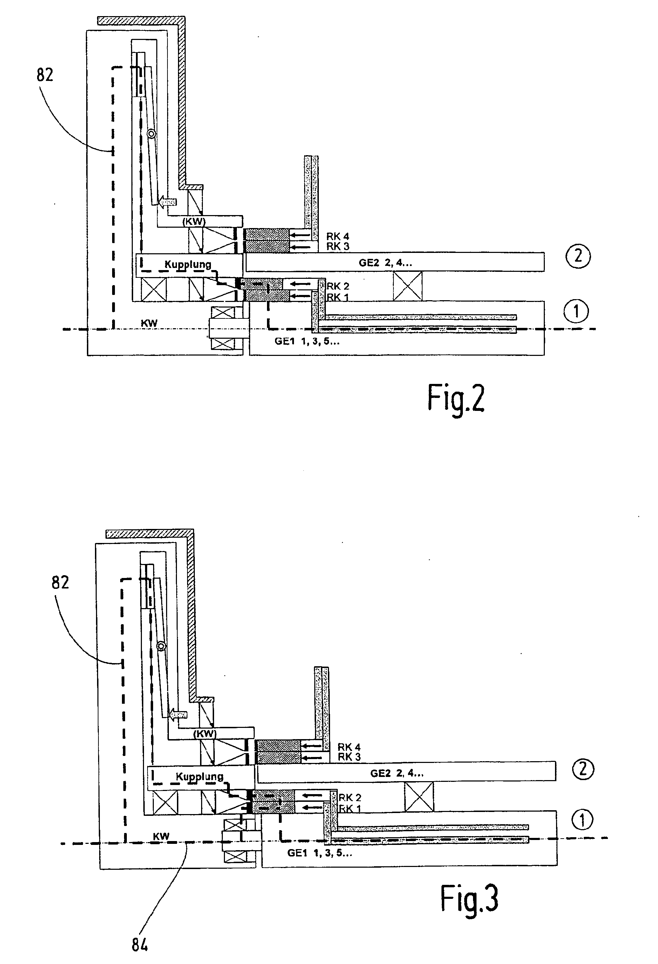

Die Funktionsweise des Antriebsstranges 20, der in Fig. 1 gezeigt ist, wird nachfolgend anhand der Fig. 2 bis 8 erläutert. Anhand der Fig. 2 bis 4 wird ein Anfahrvorgang im ersten Gang erläutert. Zu diesem Zweck wird zunächst in dem ersten Teilgetriebe 26 die Gangstufe 1 ausgewählt, was in Fig. 2 durch die Ziffer 1 mit einem darum herum vorgesehenen Kreis angedeutet ist. In dem zweiten Teilgetriebe kann bereits die zweite Gangstufe vorgewählt sein. Anschließend wird die zweite Reibkupplung 64 betätigt, um die erste Getriebeeingangswelle 30 mit dem zweiten Wellenabschnitt 54, d.h. dem Ausgangsglied der Lastkupplungseinrichtung 40 zu verbinden. Anschließend wird die Lastkupplungseinrichtung 40 betätigt, so dass ein Anfahrleistungsfluss 82 von der Eingangswelle 22 über die Lastkupplungseinrichtung 40 in das erste Teilgetriebe 26 eingeleitet wird, um den Anfahrvorgang durchzuführen.

In Fig. 3 ist ein Zustand gezeigt, bei dem die Eingangswelle 22 und die erste Getriebeeingangswelle 30 synchron drehen. In diesem Zustand wird die erste Kupplung 62 betätigt, so dass die Antriebsleistung zum einen über die Lastkupplungseinrichtung 40 (Anfahrleistungsfluss 82) und zum andern direkt von der Eingangswelle 22 auf die erste Getriebeeingangswelle 30 übertragen wird (Leistungsfluss erster Gang).

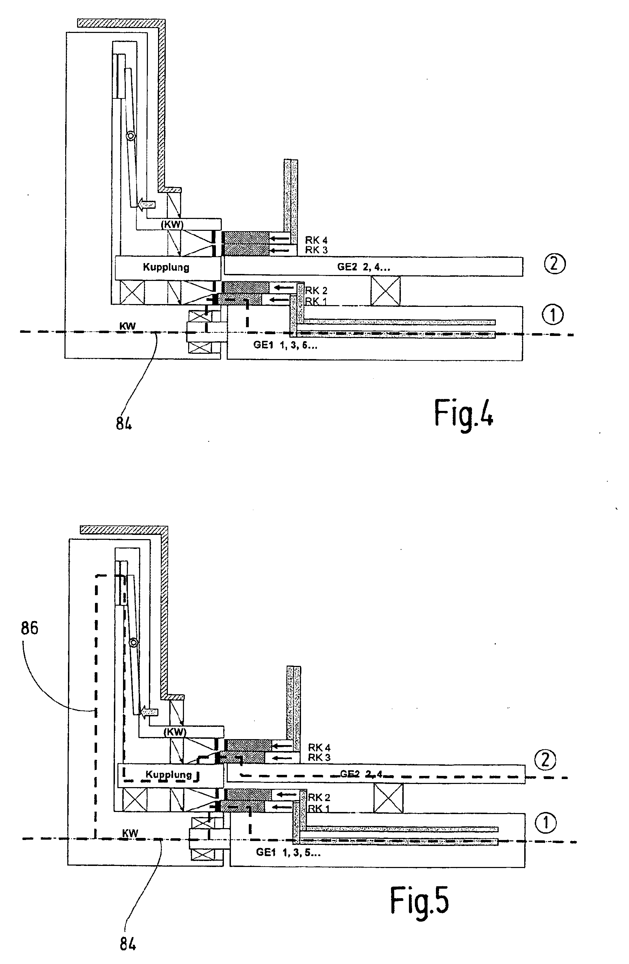

Anschließend kann, wie es in Fig. 4 gezeigt ist, die zweite Kupplung 64 geöffnet werden, so dass das Fahrzeug im ersten Gang fahren kann, wobei die Antriebsleistung ausschließlich über die erste Kupplung 62 in das erste Teilgetriebe 26 eingeleitet wird, wie es durch den Leistungsfluss 84 gezeigt ist. Die Lastkupplungseinrichtung 40 kann anschließend oder auch bereits vorher geöffnet werden.

In den Fig. 5 bis 8 ist ein Schaltvorgang zum Schalten von der Gangstufe 1 in die Gangstufe 2 dargestellt.

Hierzu wird zunächst ausgehend von dem Zustand der Fig. 4 die dritte Kupplung 66 betätigt, um den dritten Wellenabschnitt 54 mit der zweiten Getriebeeingangswelle 32 zu verbinden. Anschließend wird die Lastkupplungseinrichtung 40 schlupfend betätigt, so dass ein Übernahmeleistungsfluss 86 eingerichtet wird, der von der Eingangswelle 22 über die schlupfende Lastkupplungseinrichtung 40 und die dritte Kupplung 66 in die zweite Getriebeeingangswelle 32 eingeleitet wird (Fig. 5).

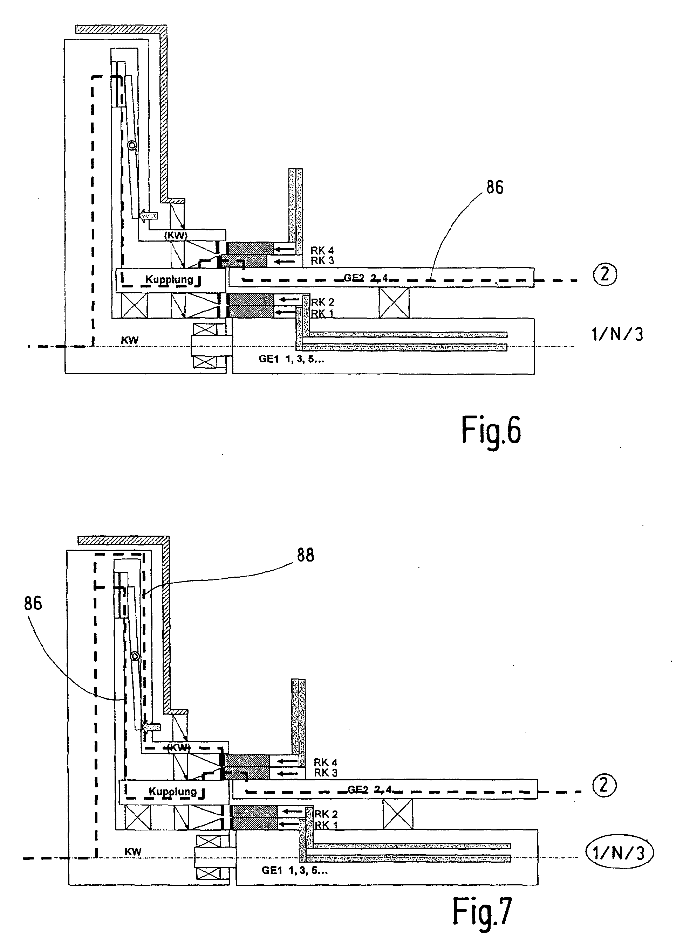

Sobald die Lastkupplungseinrichtung 40 das anstehende Moment übernommen hat, kann die erste Kupplung 62 geöffnet werden, wie es in Fig. 6 dargestellt ist. In diesem Zustand fließt die Antriebsleistung von der Eingangswelle 22 über die nun geschlossene Lastkupplungseinrichtung 40 und die dritte Kupplung 66 in das zweite Teilgetriebe 28. In dem ersten Teilgetriebe 28 kann nach wie vor die erste Gangstufe vorgewählt bleiben. Alternativ kann das erste Teilgetriebe 26 in dem Zustand neutral (N) oder bereits in die nachfolgende Gangstufe 3 vorgewählt werden.

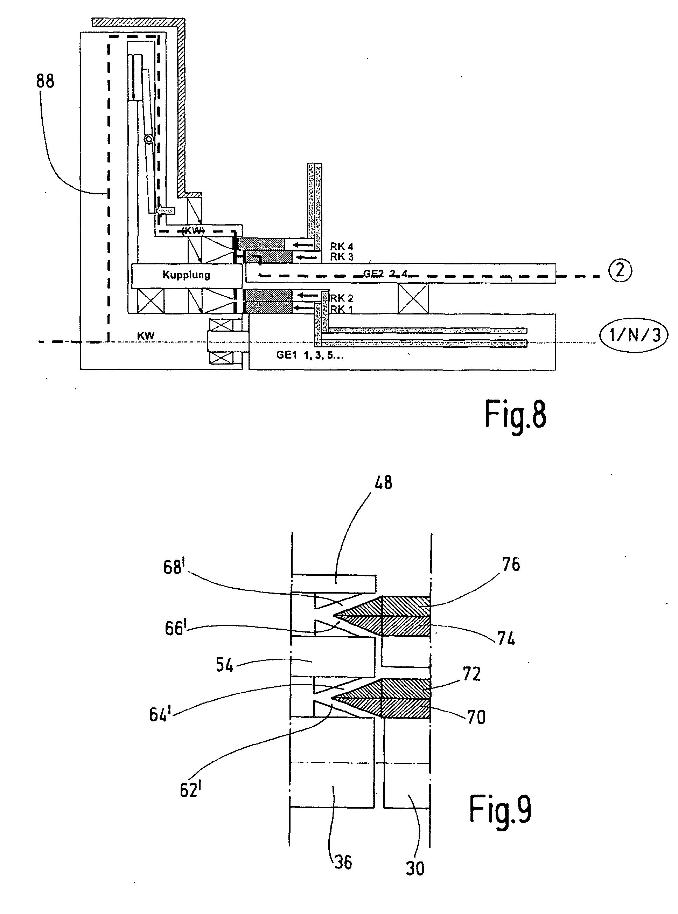

In Fig. 7 ist gezeigt, dass aus dem Zustand der Fig. 6 heraus der zweite Wellenabschnitt 48 mit der synchron laufenden zweiten Getriebeeingangswelle 32 verbunden wird (über die vierte Kupplung 68). Anschließend kann, wie es in Fig. 8 gezeigt ist, die dritte Kupplung 66 geöffnet werden, so dass die Antriebsleistung von der Eingangswelle 22 über die vierte Kupplung 68 in das zweite Teilgetriebe 28 übertragen wird (Leistungsfluss 88 für die zweite Gangstufe).

Die folgenden Gangwechsel können in entsprechender Weise erfolgen. Ferner können Rückschaltvorgänge genauso wie der dargestellte Hochschaltvorgang in entsprechender Weise erfolgen.

Die Ringkolbenaktuatoren 70-76 können in Öffnungsrichtung vorgespannt sein (obgleich dies in Fig. 1 nicht dargestellt ist). Auch in einen Verspannungszustand oder beispielsweise beim Bremsen können die Kupplungen 62-68 jederzeit leicht geöffnet werden, da diese nicht formschlüssig arbeiten.

In Fig. 9 ist gezeigt, dass die Kupplungen anstelle der in den Fig. 1 bis 8 gezeigten Hirth-Verzahnungskupplungen auch als Konuskupplungen ausgebildet sein können. Die vier Kupplungen sind in entsprechender Weise mit 62', 64', 66', 68' bezeichnet. Die übrigen Elemente entsprechen der Ausführungsform der Fig. 1 bis 8.

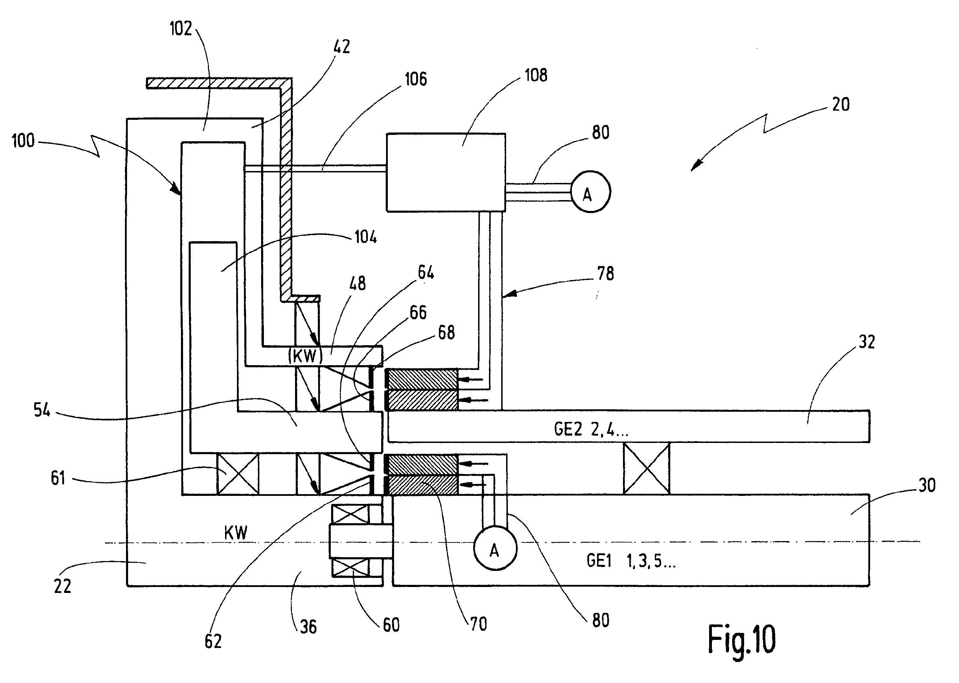

In Fig. 10 ist eine alternative Ausführungsform eines Antriebsstranges 20 dargestellt. Dieser entspricht hinsichtlich Aufbau und Funktionsweise generell dem Antriebsstrang 20 der Fig. 1 bis 8. Auch bei dem Antriebsstrang 20 der Fig. 10 können anstelle der dargestellten Hirth-Verzahnungskupplungen 62-68 Konuskupplungen 62'-68' vorgesehen sein. Gleiche Elemente sind mit gleichen Bezugsziffern bezeichnet. Im Folgenden werden lediglich die Unterschiede erläutert.

Bei dem Antriebsstrang 20 der Fig. 10 ist die Lastkupplungseinrichtung 40 als hydrostatische Pumpe in Form einer Radialkolbenpumpe 100 ausgebildet. Andere hydrostatische Pumpen können in entsprechender Weise als Lastkupplungseinrichtung 40 verwendet werden.

Bei der Radialkolbenpumpe 100 ist der Käfig 42 als Pumpengehäuse 102 ausgebildet. Eine Radialkolbenanordnung 104 innerhalb des Pumpengehäuses 102 ist schematisch bei 104 gezeigt.

Die Radialkolbenanordnung 104 ist mit einer Ausgangswelle verbunden, die mit dem dritten Wellenabschnitt 54 verbunden ist.

Die Radialkolbenpumpe 100 ist über eine Druckleitung 106 mit einer hydraulischen Steuereinrichtung 108 verbunden. In der hydraulischen Steuereinrichtung 108 kann ein nicht näher dargestelltes Druckregelventil zum Steuern des Öffnens und Schließens der Lastkupplungseinrichtung 40 vorgesehen sein. Bei Schließen des Ventils wird die Radialkolbenanordnung 104 mit dem Pumpengehäuse 102 mitgenommen, so dass die Lastkupplungseinrichtung 40 geschlossen ist. Bei geöffnetem Steuerventil läuft die Radialkolbenpumpe 100 leer, so dass die Lastkupplungseinrichtung 40 offen ist. Durch Ausbilden des Ventils als Druckregelventil kann mit der Radialkolbenpumpe 100 in gleicher Weise wie bei einer Trockenkupplung ein schlupfender Zustand eingerichtet werden.

Der von der Radialkolbenpumpe 100 bei ganz oder teilweise geöffnetem Druckventil erzeugte hydraulische Druck kann über die Druckleitung 106 mit den Aktuatoren zum Betätigen der Kupplungen 62-68 verbunden werden. In der hydraulischen Steuereinrichtung 108 kann zu diesem Zweck auch ein Druckspeicher vorgesehen sein, in dem der notwendige Ansteuerdruck gespeichert wird. Eine separate Pumpe zum Antreiben der Aktuatoren 70-76 ist folglich nicht unbedingt erforderlich, obgleich dies bei sehr hohen Betätigungsdrücken nach wie vor vorteilhaft sein kann.

Demzufolge ist die hydraulische Steuereinrichtung 108 auch mit den ersten und zweiten Ölzuführungen 78, 80 verbunden.

Mit dem erfindungsgemäßen Antriebsstrang kann als Lastkupplungseinrichtung 40 eine beliebige Kupplung verwendet werden. Diese kann auch als "normally closed"-Kupplung ausgebildet sein, da der Antriebsstrang 20 aufgrund der Kupplungen 62, 68, die als Reibkupplungen ausgebildet sind, generell "normally open" ist.

Der Antriebsstrang 20 weist eine reduzierte Baulänge und ein geringeres Gewicht auf, insbesondere im Vergleich zu herkömmlichen Doppelkupplungsgetrieben. Ferner ergibt sich ein Packagevorteil. Der Getriebeaufbau kann dem eines an sich bekannten Doppelkupplungsgetriebes entsprechen.

## Patentansprüche

1. Lastschaltbarer Antriebsstrang (20), mit einer Eingangswelle (22), die mit einer Antriebseinheit (12) verbindbar ist, mit einem Stufengetriebe (24), das ein erstes Teilgetriebe (26) mit einer ersten Getriebeeingangswelle (30) und ein zweites Teilgetriebe (28) mit einer zweiten Getriebeeingangswelle (32) sowie eine mit den Ausgängen der Teilgetriebe (26, 28) verbundene Getriebeausgangswelle (34) und eine Mehrzahl von Radsätzen zur Einrichtung unterschiedlicher Gangstufen aufweist, und mit einer Lastkupplungseinrichtung (40), deren Eingangsglied (50) mit der Eingangswelle (22) verbunden ist, wobei die Eingangswelle (22) über eine erste Kupplung (62) mit der ersten Getriebeeingangswelle (30) verbindbar ist, wobei ein Ausgangsglied (52) der Lastkupplungseinrichtung (40) mittels einer zweiten Kupplung (64) mit der ersten Getriebeeingangswelle (30) und mittels einer dritten Kupplung (66) mit der zweiten Getriebeeingangswelle (32) verbindbar ist, und wobei die Eingangswelle (22) mittels einer vierten Kupplung (68) mit der zweiten Getriebeeingangswelle (32) verbindbar ist, wobei wenigstens eine der Kupplungen (62-68) als Reibkupplung ausgebildet ist, **dadurch gekennzeichnet, dass** die Eingangswelle (22) mit einem die Lastkupplungseinrichtung (40) umgebenden Käfig (42) verbunden ist, der auf der dem Stufengetriebe (24) zugewandten Seite einen zweiten Wellenabschnitt (48) aufweist, an dem ein zweites Eingangsglied für die vierte Kupplung (68) angeordnet ist.

2. Antriebsstrang nach Anspruch 1, **dadurch gekennzeichnet, dass** wenigstens eine der Kupplungen als Konuskupplung (62'-68') ausgebildet ist.

3. Antriebsstrang nach Anspruch 1 oder 2, **dadurch gekennzeichnet, dass** wenigstens eine der Kupplungen (62-68) als Hirth-Verzahnungskupplung ausgebildet ist.

4. Antriebsstrang nach einem der Ansprüche 1 - 3, **dadurch gekennzeichnet, dass** wenigstens zwei der Kupplungen (62-68) radial ineinander verschachtelt angeordnet sind.

5. Antriebsstrang nach einem der Ansprüche 1 - 4, **dadurch gekennzeichnet, dass** wenigstens zwei der Kupplungen (62-68) zwischen der Lastkupplungseinrichtung (40) und dem Stufengetriebe (24) angeordnet sind.

6. Antriebsstrang nach einem der Ansprüche 1 - 5, **dadurch gekennzeichnet, dass** wenigstens zwei der Kupplungen (62', 64') in dem Stufengetriebe (24) angeordnet sind.

7. Antriebsstrang nach einem der Ansprüche 1 - 6, **dadurch gekennzeichnet, dass** die wenigstens eine Kupplung (62-68) durch einen hydraulischen Aktuator (70-76) betätigbar ist.

8. Antriebsstrang nach Anspruch 7, **dadurch gekennzeichnet, dass** der Aktuator (70-76) ein Ringkolbenaktuator ist.

9. Antriebsstrang nach einem der Ansprüche 1 - 8, **dadurch gekennzeichnet, dass** die Lastkupplungseinrichtung (40) als Trockenkupplung ausgebildet ist.

10. Antriebsstrang nach einem der Ansprüche 1 - 8 oder nach dem Oberbegriff des Anspruchs 1, **dadurch gekennzeichnet, dass** die Lastkupplungseinrichtung durch eine hydrostatische Pumpe (100) gebildet ist.

11. Antriebsstrang nach Anspruch 10, **dadurch gekennzeichnet, dass** die hydrostatische Pumpe (100) schlupfend betreibbar ist und im Schlupfbetrieb unter Druck stehendes Fluid in einer Druckleitung (106) bereitstellt.

12. Antriebsstrang nach Anspruch 11, **dadurch gekennzeichnet, dass** die Druckleitung (106) mit einer hydraulischen Steuereinrichung (108) verbunden ist, die dazu ausgelegt ist, die wenigstens eine Kupplung (62-68) mittels des unter Druck stehenden Fluides zu betätigen.

13. Antriebsstrang nach einem der Ansprüche 1 - 12, **dadurch gekennzeichnet, dass** die Eingangswelle (22) sich axial durch die Lastkupplungseinrichtung (40) hindurch erstreckt und dort einen ersten Wellenabschnitt (36) aufweist, an dem ein erstes Eingangsglied für die erste Kupplung (62) angeordnet ist.

14. Antriebsstrang nach Anspruch 1 und 13, **dadurch gekennzeichnet, dass** der erste Wellenabschnitt (36) und der zweite Wellenabschnitt (48) in axialer Richtung etwa gleich lang sind.

## Claims

1. Power-shift drive train (20), having an input shaft (22) which can be connected to a drive unit (12), having a multi-step transmission (24) which has a first sub-transmission (26) with a first transmission input shaft (30) and a second sub-transmission (28) with a second transmission input shaft (32) and a transmission output shaft (34) which is connected to the outputs of the sub-transmissions (26, 28) and a plurality of gear sets for setting up different gear stages, and having a power-shift clutch device (40), the input element (50) of which is connected to the input shaft (22), wherein the input shaft (22) is connectable via a first clutch (62) to the first transmission input shaft (30), wherein an output element (52) of the power-shift clutch device (40) is connectable by means of a second clutch (64) to the first transmission input shaft (30) and by means of a third clutch (66) to the second transmission input shaft (32), and wherein the input shaft (22) is connectable via a fourth clutch (68) to the second transmission input shaft (32), wherein at least one of the clutches (62-68) is being configured as a friction clutch, **characterized in that** the input shaft (22) is connected to a cage (42) which surrounds the power-shift clutch device (40) and has a second shaft section (48) on the side which faces the multi-step transmission (24), on which second shaft section (48) a second input element for the fourth clutch (68) is arranged.

2. Drive train according to Claim 1, **characterized in that** at least one of the clutches is configured as a cone clutch (62' - 68').

3. Drive train according to Claim 1 or 2, **characterized in that** at least one of the clutches (62-68) is configured as a Hirth-serrated clutch.

4. Drive train according to one of Claims 1 to 3, **characterized in that** at least two of the clutches (62-68) are arranged such that they are nested radially in one another.

5. Drive train according to one of Claims 1 to 4, **characterized in that** at least two of the clutches (62-68) are arranged between the power-shift clutch device (40) and the multi-step transmission (24).

6. Drive train according to one of Claims 1 to 5, **characterized in that** at least two of the clutches (62', 64') are arranged in the multi-step transmission (24).

7. Drive train according to one of Claims 1 to 6, **characterized in that** the at least one clutch (62-68) can be actuated by a hydraulic actuator (70-76).

8. Drive train according to Claim 7, **characterized in that** the actuator (70-76) is an annular-piston actuator.

9. Drive train according to one of Claims 1 to 8, **characterized in that** the power-shift clutch device (40) is configured as a dry clutch.

10. Drive train according to one of Claims 1 to 8 or according to the preamble of Claim 1, **characterized in that** the power-shift clutch device is formed by a hydrostatic pump (100).

11. Drive train according to Claim 10, **characterized in that** the hydrostatic pump (100) can be operated with slip and provides pressurized fluid in a pressure line (106) during slip operation.

12. Drive train according to Claim 11, **characterized in that** the pressure line (106) is connected to a hydraulic control device (108) which is designed to actuate the at least one clutch (62-68) by means of the pressurized fluid.

13. Drive train according to one of Claims 1 to 12, **characterized in that** the input shaft (22) extends axially through the power-shift clutch device (40) and has a first shaft section (36) there, on which a first input element for the first clutch (62) is arranged.

14. Drive train according to Claims 1 and 13, **characterized in that** the first shaft section (36) and the second shaft section (48) are approximately of equal length in the axial direction.

## Revendications

1. Chaîne cinématique à changement de rapports sous charge (20), comprenant un arbre d'entrée (22), qui peut être connecté à une unité d'entraînement (12), une transmission à rapports étagés (24), qui présente une première transmission partielle (26) avec un premier arbre d'entrée de transmission (30) et une deuxième transmission partielle (28) avec un deuxième arbre d'entrée de transmission (32) ainsi qu'un arbre de sortie de transmission (34) connecté aux sorties des transmissions partielles (26, 28) et une pluralité de jeux de pignons pour réaliser différents rapports de vitesses, et comprenant un dispositif d'embrayage sous charge (40) dont l'organe d'entrée (50) est connecté à l'arbre d'entrée (22), l'arbre d'entrée (22) pouvant être connecté par le biais d'un premier embrayage (62) au premier arbre d'entrée de transmission (30), un organe de sortie (52) du dispositif d'embrayage sous charge (40) pouvant être connecté au moyen d'un deuxième embrayage (64) au premier arbre d'entrée de transmission (30) et au moyen d'un troisième embrayage (66) au deuxième arbre d'entrée de transmission (32), et l'arbre d'entrée (22) pouvant être connecté au moyen d'un quatrième embrayage (68) au deuxième arbre d'entrée de transmission (32), au moins l'un des embrayages (62-68) étant réalisé sous forme d'embrayage à friction, **caractérisée en ce que** l'arbre d'entrée (22) est connecté à une cage (42) entourant le dispositif d'embrayage sous charge (40), qui présente, du côté tourné vers la transmission à rapports étagés (24), une deuxième portion d'arbre (48) sur laquelle est disposé un deuxième organe d'entrée pour le quatrième embrayage (68).

2. Chaîne cinématique selon la revendication 1, **caractérisée en ce qu'**au moins l'un des embrayages est réalisé sous forme d'embrayage à cône (62'-68').

3. Chaîne cinématique selon la revendication 1 ou 2, **caractérisée en ce qu'**au moins l'un des embrayages (62-68) est réalisé sous forme d'embrayage à denture de Hirth.

4. Chaîne cinématique selon l'une quelconque des revendications 1 à 3, **caractérisée en ce qu'**au moins deux des embrayages (62-68) sont disposés de manière emboîtée radialement l'un dans l'autre.

5. Chaîne cinématique selon l'une quelconque des revendications 1 à 4, **caractérisée en ce qu'**au moins deux des embrayages (62-68) sont disposés entre le dispositif d'embrayage sous charge (40) et la transmission à rapports étagés (24).

6. Chaîne cinématique selon l'une quelconque des revendications 1 à 5, **caractérisée en ce qu'**au moins deux des embrayages (62', 64') sont disposés dans la transmission à rapports étagés (24).

7. Chaîne cinématique selon l'une quelconque des revendications 1 à 6, **caractérisée en ce que** l'au moins un embrayage (62-68) peut être actionné par un actionneur hydraulique (70-76).

8. Chaîne cinématique selon la revendication 7, **caractérisée en ce que** l'actionneur (70-76) est un actionneur à piston annulaire.

9. Chaîne cinématique selon l'une quelconque des revendications 1 à 8, **caractérisée en ce que** le dispositif d'embrayage sous charge (40) est réalisé sous forme d'embrayage sec.

10. Chaîne cinématique selon l'une quelconque des revendications 1 à 8, ou selon le préambule de la revendication 1, **caractérisée en ce que** le dispositif d'embrayage sous charge est formé par une pompe hydrostatique (100).

11. Chaîne cinématique selon la revendication 10, **caractérisée en ce que** la pompe hydrostatique (100) peut être entraînée par glissement et en mode de glissement fournit du fluide sous pression dans une conduite de pression (106).

12. Chaîne cinématique selon la revendication 11, **caractérisée en ce que** la conduite de pression (106) est connectée à un dispositif de commande hydraulique (108), qui est conçu pour actionner au moins un embrayage (62-68) au moyen du fluide sous pression.

13. Chaîne cinématique selon l'une quelconque des revendications 1 à 12, **caractérisée en ce que** l'arbre d'entrée (22) s'étend axialement à travers le dispositif d'embrayage sous charge (40) et présente à cet endroit une première portion d'arbre (36) sur laquelle est disposé un premier organe d'entrée pour le premier embrayage (62).

14. Chaîne cinématique selon les revendications 1 et 13, **caractérisée en ce que** la première portion d'arbre (36) et la deuxième portion d'arbre (48) ont approximativement la même longueur dans la direction axiale.
